# EUROPÄISCHE PATENTSCHRIFT

(11) **EP 1 680 313 B1**
(45) Veröffentlichungstag und Bekanntmachung des Hinweises auf die Patenterteilung: **19.03.2008**
(21) Anmeldenummer: 05779258.2
(22) Anmeldetag: 29.08.2005
(51) Int. Cl.: B60R 21/013

(54) **SENSORSYSTEM ZUR ERFASSUNG EINES FUSSGÄNGERAUFPRALLS**
SENSOR SYSTEM FOR DETECTING A COLLISION WITH A PEDESTRIAN
SYSTEME DETECTEUR DESTINE A LA DETECTION D'UNE COLLISION AVEC UN PIETON

(30) Priorität: 09.11.2004 DE 102004054072
(43) Veröffentlichungstag der Anmeldung: 19.07.2006
(73) Patentinhaber: SIEMENS AKTIENGESELLSCHAFT, 80333 München (DE)
(72) Erfinder: SCHLÖGL, Michael, 63654 Büdingen-Aulendiebach (DE)
(86) Internationale Anmeldenummer: PCT/EP2005/054236
(87) Internationale Veröffentlichungsnummer: WO 2006/051008

(56) Entgegenhaltungen:
- WO-A-20/04089704
- DE-A1- 10 045 698
- DE-A1- 10 141 730
- DE-A1- 10 256 950
- DE-A1-2102004 012 85

## Beschreibung

Die Erfindung betrifft Sensorsystem zur Erfassung eines Fußgängeraufpralls im Frontbereich eines Kraftfahrzeuges mit mindestens einem faseroptischen Sensor, der sich im Frontbereich des Kraftfahrzeuges weitgehend über die gesamte Fahrzeugbreite erstreckt und durch den Aufprall eines Objektes im Frontbereich verformbar ist, wobei durch den Aufprall des Objektes vom faseroptischen Sensor ein Signal erzeugt wird.

Kraftfahrzeugherstellern stellt sich die Aufgabe, neu entwickelte Fahrzeuge derart zu optimieren, dass Fußgänger, die bei einem Unfall frontal von dem Fahrzeug erfasst werden, möglichst geringe Verletzungen erfahren. Hierbei hat es sich gezeigt, dass die im Frontbereich angeordnete Motorhaube von Kraftfahrzeugen sehr gut geeignet ist, den Aufprall eines Fußgängers abzufangen und die auf den Fußgänger einwirkenden Kräfte zu minimieren, indem die Motorhaube beim Auftreffen des Fußgängers entsprechend nachgibt. Bei modernen Kraftfahrzeugen ist jedoch die Integrationsdichte der Aggregate im Motorraum derartig hoch, dass unter der Motorhaube kaum Platz zu den meist sehr harten Aggregaten im Motorraum verbleibt. So kann zum Beispiel der Oberkörper des verunfallten Fußgängers auf die Motorhaube auftreffen, wobei sich diese verformt und nachgibt, jedoch ist der verformungsweg meist sehr begrenzt, da sich nur wenige Zentimeter unterhalb der Motorhaube schon der Zylinderkopf des Verbrennungsmotors des Kraftfahrzeugs befindet, der derartig hart ist, dass dem verunfallten Fußgänger schwerste Verletzungen zugefügt werden. Um dem entgegenzuwirken, wurden Motorhauben entwickelt, die im Falle eines frontalen Unfalls mit einem Fußgänger aus ihrer üblichen Einbaulage gelöst werden und etwa 10 bis 50 cm über diese Einbaulage angehoben werden. Dadurch entsteht zwischen der angehobenen Motorhaube und den Aggregaten im Motorraum eine Art Knautschzone, die bewirkt, dass der verunfallte Fußgänger nicht direkt auf die sehr harten Aggregate aufschlägt. Um eine solche Anhebung der Motorhaube im Unfallfall zu realisieren, müssen Sensoren geschaffen werden, die zunächst den Frontalaufprall eines Objektes schnell und sicher erkennen und darüber hinaus unterscheiden können, ob es sich bei dem angefahrenen Objekt um einen Fußgänger oder ein unbelebtes Objekt handelt. Ist ein Fußgänger in den Unfall verwickelt, so soll die Motorhaube aus ihrer normalen Einbaulage gelöst werden und einige Zentimeter angehoben werden, um den Fußgänger zu schonen. Wenn es sich allerdings um einen Zusammenstoß mit einem unbelebten Objekt handelt, soll die Motorhaube unter keinen Umständen aus ihrer normalen Einbaulage gelöst werden, weil sie als Energie absorbierendes Bauteil zum Schutz der Kraftfahrzeuginsassen dienen soll.

Aus der DE 102 56 950 A1, dass die Merkmale des Oberbegriffs des Anspruchs 1 zeigt, ist ein Fußgängerschutzsystem und ein Verfahren zum Schutz von Fußgängern bekannt. Hier wird ein optischer Sensor für ein Kraftfahrzeug angegeben, der im Frontbereich eines Kraftfahrzeugs verbaut ist. Der optische Fasersensor umfasst eine Lichtquelle und Detektoren sowie zwei optische Fasern, die das von der Lichtquelle erzeugte Licht transportieren und zu den Detektoren weiterleitet. Die zwei optischen Fasern sind in einem Trägermaterial angeordnet. Dabei ist eine optische Faser mit einem sensitiven Bereich ausgestattet, während die andere optische Faser nicht mit einem sensitiven Bereich versehen ist. Koppelt man nun Licht aus einer Lichtquelle an einem Ende der optischen Faser ein, so wird das Licht durch die optische Faser geleitet und es gelangt schließlich mit einer verbleibenden Intensität zum anderen Ende der optischen Faser. Dort kann von einem Detektor die verbleibende Lichtintensität gemessen werden. Wird nun der sensitive Bereich des optischen Fasersensors, etwa durch das Auftreffen eines Objektes, deformiert, so hat dies einen Einfluss auf die in diesem Bereich austretende Lichtintensität und somit auch auf die von dem Detektor nachgewiesenen Intensität.

Bei der Verwendung von faseroptischen Sensoren versucht man durch aufwändige Softwarelösungen, die in der Auswerteeinheit des faseroptischen Sensors ausgeführt werden, zu unterscheiden, ob es sich bei dem im Frontbereich aufgeprallten Objekt um ein belebtes oder ein unbelebtes Objekt handelt. Wie schon eingangs beschrieben, ist diese Entscheidung enorm wichtig dafür, ob die Motorhaube aus ihrer ursprünglichen Einbaulage gelöst und angehoben werden soll oder ob sie in ihrer ursprünglichen Verankerung verbleiben soll. Diese Unterscheidung zwischen belebten und unbelebten Objekten im Unfallfall gestaltet sich äußerst schwierig und ist auch mit aufwändigen Programmen noch nicht zufrieden stellend lösbar.

Daher ist es die Aufgabe der vorliegenden Erfindung, ein Sensorsystem zur Erfassung eines Fußgängeraufpralls im Frontbereich eines Kraftfahrzeugs mit mindestens einem faseroptischen Sensor anzugeben, das eine zuverlässige Unterscheidung zwischen dem Aufprall belebter und unbelebter Objekte ermöglicht.

Die Aufgabe wird erfindungsgemäß dadurch gelöst, dass zusätzlich zum faseroptischen Sensor mindestens ein Infrarotsensor im Frontbereich des Kraftfahrzeuges angeordnet ist, der ein Signal zur Unterscheidung zwischen dem Aufprall belebter und unbelebter Objekte erzeugt.

Die Erfindung hat den Vorteil, dass nun ein Signal zur Verfügung steht mit dessen Hilfe eindeutig und sehr schnell unterschieden werden kann, ob das Kraftfahrzeug auf ein belebtes oder ein unbelebtes Objekt aufgeprallt ist. Aufwendige Rechenprogramme mit der dazugehörigen Hardware, die anhand einer charakteristischen Änderung der Lichttransmission durch den faseroptischen Sensor eine Unterscheidung zwischen einem Aufprall eines belebten und eines unbelebten Objektes erreichen sollen, werden durch die erfindungsgemäße Nutzung des Infrarotsensors in Kombination mit den faseroptischen Sensor nicht mehr benötigt.

Bei einer Ausgestaltung der Erfindung ist der faseroptische Sensor in die vordere Stoßstange des Kraftfahrzeuges integriert. Teile der Stoßstange können so gestaltet sein, dass sie beim Aufprall eines Objektes leicht verformbar sind, womit auch der faseroptische Sensor im Unfallfall geeignet verformt wird, um sein Signal optimal zu erzeugen.

Bei einer nächsten Ausgestaltung ist auch der Infrarotsensor in die vordere Stoßstange des Kraftfahrzeuges integriert. In dieser Position erfasst der Infrarotsensor das Objekt am ehesten, womit frühzeitig die Unterscheidung zwischen belebten und unbelebten Objekten erfolgen kann.

Bei einer Weiterbildung werden die Signale des faseroptischen Sensors und des Infrarotsensors von einem Steuergerät ausgewertet. In diesem Steuergerät werden die verfügbaren Informationen über die Art des Unfalls zusammengeführt und ausgewertet. Dabei entscheidet das Steuergerät darüber, ob Motorhaube aus ihrer ursprünglichen Einbaulage gehoben werden soll. Diese Entscheidung kann in dem Steuergerät schnell und sicher erfolgen.

Bei einer nächsten Weiterbildung werden dem Steuergerät auch Signale eines Temperatursensors zugeführt, die in dem Steuergerät zusätzlich zu den Signalen des faseroptischen Sensors und des Infrarotsensors ausgewertet werden. Hierdurch kann der Infrarotsensor auf die jeweilige Außentemperatur kalibriert werden, was eine noch genauere Unterscheidung zwischen belebten und unbelebten Objekten ermöglicht.

Darüber hinaus ist es vorteilhaft, wenn dem Steuergerät auch Signale von einem Geschwindigkeitsmesser zugeführt werden, die in dem Steuergerät zusätzlich zu den Signalen des faseroptischen Sensors, des Infrarotsensors und des Temperatursensors ausgewertet werden. Auch die zusätzliche Information über die Fahrzeuggeschwindigkeit kann eine wichtige Größe für die Entscheidung zur Anhebung der Motorhaube sein.

Die Erfindung lässt zahlreiche Ausführungen zu. Ein davon wird beispielhaft anhand der Figuren beschrieben. Diese zeigen in:
- Figur 1:: ein Kraftfahrzeug mit einer Motorhaube und einer Stoßstange,
- Figur 2:: einen seitlichen Schnitt durch den Motorraum des Kraftfahrzeugs,
- Figur 3:: eine Unfallsituation mit einer Person,
- Figur 4:: eine Stoßstange mit einem faseroptischen Sensor,
- Figur 5:: eine Unfallsituation mit einem belebten Objekt,
- Figur 6:: eine Unfallsituation mit einem unbelebten Objekt.

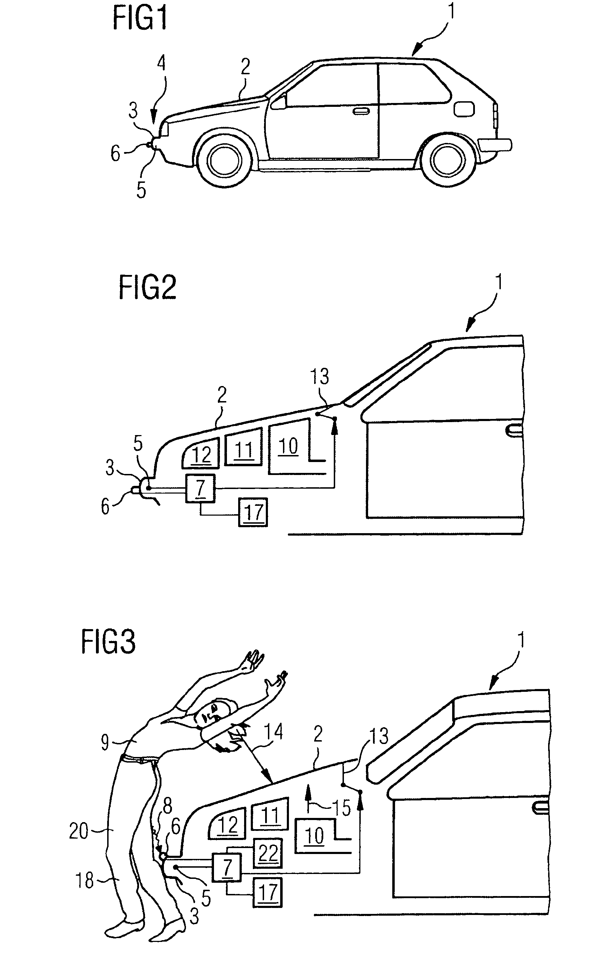

Figur 1 zeigt ein Kraftfahrzeug 1 mit einer Motorhaube 2 und einer Stoßstange 3. Die Stoßstange 3 ist im Frontbereich 4 des Kraftfahrzeugs angeordnet und beinhaltet einen faseroptischen Sensor 5. Weiterhin ist auf der Stoßstange 3 ein Infrarotsensor 6 angeordnet.

Einen seitlichen Schnitt durch den Motorraum des Kraftfahrzeugs 1 zeigt Figur 2. Es ist wiederum die Motorhaube 2 und die Stoßstange 3 zu erkennen. Im Motorraum unter der Motorhaube 2 befinden sich der Motorblock 10, ein erstes Nebenaggregat 11 und ein zweites Nebenaggregat 12. Die Motorhaube 2 ist in der Regel aus dünnem und nachgiebigem Stahlblech gefertigt, dass den Aufprall einer verunglückten Person 9 durchaus vorteilhaft abfangen kann. In Figur 2 ist jedoch deutlich dargestellt, dass sich unter der Motorhaube 2 des Kraftfahrzeugs 1 in hoher Integrationsdichte Aggregate 10, 11, 12 befinden, die in der Regel aus sehr hartem und unnachgiebigem Material gefertigt sind. Der Motorblock 10 beispielsweise ist in der Regel nur wenige Zentimeter unter der Motorhaube 2 angeordnet, wodurch eine auf die Motorhaube 2 auftreffende verunfallte Person 9 schwere Verletzungen erleiden kann. Um dem vorzubeugen, ist in der Stoßstange 3 ein faseroptischer Sensor 5 angeordnet, der das Auftreffen eines Objektes erkennen kann. Mit diesem faseroptischen Sensor 5 ist es jedoch problematisch zu unterscheiden, ob ein belebtes Objekt 20 oder ein unbelebtes Objekt 21 von dem Fahrzeug angefahren wurde. Im Steuergerät 7 können Programme ablaufen, die anhand der Verformungscharakteristik des faseroptischen Sensors 5 und der daraus resultierenden charakteristischen Intensitätsänderung des durch die Faser übertragenen Lichts eine Unterscheidung zwischen belebten Objekten 20 und unbelebten Objekten 21 ermöglichen. Diese Unterscheidung erfolgt jedoch nicht vollständig zufrieden stellend und die Programme benötigen in der Regel eine lange Rechenzeit und eine relativ hohe Rechenleistung, bevor eine Unterscheidung zwischen belebten und unbelebten Aufprallobjekten möglich ist. Daher ist im Frontbereich 4 des Kraftfahrzeugs 1 ein Infrarotsensor 6 platziert, der anhand der vom angefahrenen Objekt ausgestrahlten Infrarotstrahlung 8 erkennt, ob es sich beim Unfallgegner um ein belebtes Objekt 20 oder ein unbelebtes Objekt 21 handelt. Alle diese Informationen werden dem Steuergerät 7 zugeführt, das entscheidet, ob der Motorhaubenheber 13 aktiviert werden soll oder nicht. Darüber hinaus wird das Steuergerät 7 von einem Temperatursensor 17 mit Informationen über die aktuelle Außentemperatur versorgt, wodurch der Infrarotsensor 6 kalibriert werden kann. Im Winter beispielsweise bei niedrigen Außentemperaturen wird eine Person 9 warme Kleidung tragen, wodurch das Infrarotspektrum das von der Person 9 ausgeht anders beschaffen ist als im Sommer bei hohen Außentemperaturen, wenn die Person 9 mit leichter Kleidung bekleidet ist. Diesen Umständen entsprechend kann das Signal des Infrarotsensors 6 in dem Steuergerät 7 ausgewertet werden, wenn der Temperatursensor 17 eine Information über die aktuelle Außentemperatur zur Verfügung stellt. Auch das Signal eines Geschwindigkeitsmessers 22 kann dem Steuergerät 7 zusätzlich zugeführt werden, um die Entscheidung zur Anhebung der Motorhaube 2 mit weiteren Informationen zu unterstützen.

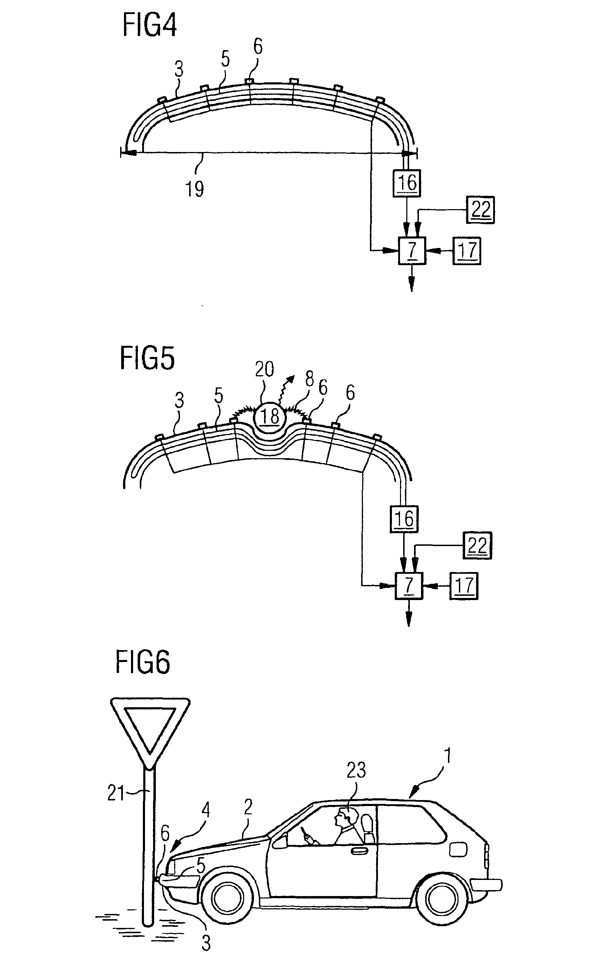

In Figur 3 wird eine Unfallsituation mit einer Person 9 dargestellt. Hier wurde die Person 9 vom Kraftfahrzeug 1 frontal erfasst. Das Bein 18 der Person 9 deformiert die Stoßstange 3, wobei auch der darin angeordnete faseroptische Sensor 5 deformiert wird, der dann ein entsprechendes Signal an das Steuergerät 7 sendet. Da es sich bei der Person 9 um ein belebtes Objekt 20 handelt, wird eine charakteristische Infrarotstrahlung 8 an den hier auf der Stoßstange 3 platzierten Infrarotsensor 6 gesendet. Die Signale des Infrarotsensors 6 werden im Steuergerät 7 ausgewertet und eventuell auf die vom Temperatursensor 17 gelieferte Außentemperatur kalibriert. Aus all diesen Informationen errechnet das Steuergerät 17 die Entscheidung, dass die Motorhaube 2 angehoben werden soll, da ein belebtes Objekt 20 angefahren wurde. Die Motorhaubenheberrichtung 15 ist in Figur 3 mit einem Pfeil dargestellt. Die Anhebung der Motorhaube erfolgt mit mindestens einem Motorhaubenheber 13, wie er beispielsweise in der DE 102 56 950 A1 beschrieben wurde. Die angefahrene Person 9 bewegt sich in Aufschlagrichtung 14 gegen die Motorhaube 2, die sich aufgrund ihrer Anhebung nun etwa 15 bis 50 cm von dem Motorblock 10 und dem ersten Nebenaggregat 11 und dem zweiten Nebenaggregat 12 entfernt hat. Da die Motorhaube 2 aus gut verformbarem dünnem Blech besteht, wird die angefahrene Person 9 relativ weich von der angehobenen Motorhaube 2 abgefangen, womit das Verletzungsrisiko wesentlich reduziert wird. Eine Unfallsituation mit einem unbelebten Objekt 21 wird später in Figur 6 dargestellt und erläutert.

Figur 4 zeigt eine Stoßstange 3, in die mindestens ein faseroptischer Sensor 5 integriert ist. Dieser faseroptische Sensor 5 besteht aus lichtleitenden Fasern, in die aus dem Optokoppler 16 Licht eingekoppelt wird, das durch den faseroptischen Sensor 5 transportiert wird und dann wieder im Optokoppler 16 in der Regel von Fotodioden ausgelesen wird. Die durch den faseroptischen Sensor 5 transportierte Lichtintensität ist ein Maß für die Lage und den Grad der Verformung des faseroptischen Sensors 5. In Figur 4 ist der faseroptische Sensor 5 in seiner vorbestimmten Einbaulage (ohne dass eine Verformung vorliegt) dargestellt. Im Optokoppler 16 wird eine bestimmte konstante Lichtintensität gemessen. Der faseroptische Sensor 5 erstreckt sich nahezu über die gesamte Fahrzeugbreite 19. Die Intensitätsinformation aus dem Optokoppler 16 wird an das Steuergerät 7 geliefert und dort verarbeitet.

Darüber hinaus sind auf der Stoßstange 3 Infrarotsensoren 6 angeordnet, die ihre Signale an das Steuergerät 7 abgeben. Das Steuergerät 7 wertet die Infrarotspektren von den Infrarotsensoren 6 aus und kalibriert sie eventuell auf die von dem Außentemperatursensor 17 gelieferte Temperaturinformation. Liefert nun ein Infrarotsensor 6 ein Spektrum, das einem belebten Objekt 20 zugeordnet wird, wird diese Information mit den Signalen des faseroptischen Sensors 5 verglichen. Wenn der faseroptische Sensor 5 keine Verformung anzeigt, löst das Steuergerät 7 auch kein Signal zur Motorhaubenhebung aus. Bewegt sich ein Infrarotstrahlung 8 imitierendes belebtes Objekt 20 nahe vor dem Fahrzeug vorbei ohne dass es zur Verformung des faseroptischen Sensors 5 kommt, bleibt die Motorhaube sicher in ihrer ursprünglichen Position. Als weiteres Signal kann dem Steuergerät 7 zur Motorhaubenhebung das Signal eines Geschwindigkeitsmessers 22 zugeführt werden. Auch die Fahrzeuggeschwindigkeit kann zu der Entscheidung beitragen, ob die Motorhaube 2 angehoben werden soll oder nicht.

In Figur 5 ist nun die Unfallsituation mit einem belebten Objekt 20 dargestellt. Das Bein 18 einer Person 9 wurde von der Stoßstange 3 erfasst und es hat diese deformiert. Damit wurde auch der faseroptische Sensor 5 vom Bein 18 der Person 9 deformiert, wodurch der Optokoppler 16 ein Lichtintensitätssignal erhält und an das Steuergerät 7 weiterleitet, das anzeigt, dass die Stoßstange 3 getroffen und deformiert wurde. Da es sich bei dem getroffenen Objekt nun um ein belebtes Objekt 20 handelt, wird es charakteristische Infrarotstrahlung 8 aussenden, die von den Infrarotsensoren 6 erfasst wird. Die Infrarotsensoren 6 liefern das erfasste Spektrum an das Steuergerät 7, dass nun unter Zuhilfenahme der Außentemperatur und der Fahrzeuggeschwindigkeit entscheidet, dass die Motorhaube 2 angehoben werden soll, da eine Person 9 angefahren wurde. Es ist zudem denkbar, dass nicht nur darüber entschieden wird, ob die Motorhaube angehoben werden soll oder nicht, sondern auch wie weit sie angehoben werden muss, um eine optimale Schutzfunktion zu gewährleisten. Gerade in diesem Zusammenhang spielt die aktuelle Fahrzeuggeschwindigkeit eine große Rolle. Die Kombination der Informationen aus dem faseroptischen Sensor 5, den Infrarotsensoren 6, dem Außentemperatursensor 17 und dem Geschwindigkeitsmesser 22 führt zu einer sicheren Entscheidung darüber, ob und wie das angefahrene Objekt geschützt werden soll.

In Figur 6 ist eine Unfallsituation mit einem unbelebten Objekt 21 dargestellt. Hier erfasst der im Frontbereich 4 des Kraftfahrzeugs 1 angeordnete faseroptische Sensor 5 eine Deformation der Stoßstange 3, wobei jedoch vom Infrarotsensor 6 kein für ein belebtes Objekt 20 charakteristisches Infrarotspektrum erkannt wird. In dieser Unfallsituation muss das Steuergerät 7 zuverlässig entscheiden, dass die Motorhaube 2 in ihrer ursprünglichen Position verbleibt, um den Fahrzeuginsassen 23 vor den bei dem Unfall auftretenden Kräften wirkungsvoll zu schützen.

## Patentansprüche

1. Sensorsystem zur Erfassung eines Fußgängeraufpralls im Frontbereich (4) eines Kraftfahrzeuges (1) mit mindestens einem faseroptischen Sensor (5), der sich im Frontbereich (4) des Kraftfahrzeuges (1) weitgehend über die gesamte Fahrzeugbreite (19) erstreckt und durch den Aufprall eines Objektes (18, 20, 21) im Frontbereich (4) verformbar ist, wobei durch den Aufprall des Objektes (18, 20, 21) vom faseroptischen Sensor (5) ein Signal erzeugt wird, **dadurch gekennzeichnet, dass** zusätzlich zum faseroptischen Sensor (5) mindestens ein Infrarotsensor (6) im Frontbereich (4) des Kraftfahrzeuges (1) angeordnet ist, der ein Signal zur Unterscheidung zwischen dem Aufpralls belebter (18, 20) und unbelebter Objekte (21) erzeugt.

2. Sensorsystem zur Erfassung eines Fußgängeraufpralls nach Anspruch 1, **dadurch gekennzeichnet, dass** der faseroptische Sensor (5) in die vordere Stoßstange (3) des Kraftfahrzeuges (1) integriert ist.

3. Sensorsystem zur Erfassung eines Fußgängeraufpralls nach den Ansprüchen 1 und/oder 2, **dadurch gekennzeichnet, dass** der Infrarotsensor (6) in die vordere Stoßstange (3) des Kraftfahrzeuges (1) integriert ist.

4. Sensorsystem zur Erfassung eines Fußgängeraufpralls nach mindestens einem der vorgenannten Ansprüche, **dadurch gekennzeichnet, dass** die Signale des faseroptischen Sensors (5) und des Infrarotsensors (6) von einem Steuergerät (7) ausgewertet werden.

5. Sensorsystem zur Erfassung eines Fußgängeraufpralls nach mindestens einem der vorgenannten Ansprüche, **dadurch gekennzeichnet, dass** dem Steuergerät (7) auch Signale von einem Temperatursensor (17) zugeführt werden, die in dem Steuergerät (7) zusätzlich zu den Signalen des faseroptischen Sensors (5) und des Infrarotsensors (6) ausgewertet werden.

6. Sensorsystem zur Erfassung eines Fußgängeraufpralls nach mindestens einem der vorgenannten Ansprüche, **dadurch gekennzeichnet, dass** dem Steuergerät (7) auch Signale von einem Geschwindigkeitsmesser (22) zugeführt werden, die in dem Steuergerät (7) zusätzlich zu den Signalen des faseroptischen Sensors (5), des Infrarotsensors (6) und des Temperatursensors (17) ausgewertet werden.

## Claims

1. A sensor system for detecting a pedestrian collision in the front region (4) of a motor vehicle (1), having at least one fiber optic sensor (5) that extends in the front region (4) of the motor vehicle (1) largely over the entire vehicle width (19) and can be deformed by the collision of an object (18, 20, 21) in the front region (4), a signal being generated by the fiber optic sensor (5) owing to the collision of the object (18, 20, 21), **characterized in that** in addition to the fiber optic sensor (5), there is arranged in the front region (4) of the motor vehicle (1) at least one infrared sensor (6) that generates a signal for distinguishing between the collision of animate (18, 20) and inanimate objects (21).

2. The sensor system for detecting a pedestrian collision as claimed in claim 1, **characterized in that** the fiber optic sensor (5) is integrated in the front fender (3) of the motor vehicle (1).

3. The sensor system for detecting a pedestrian collision as claimed in claims 1 and/or 2, **characterized in that** the infrared sensor (6) is integrated in the front fender (3) of the motor vehicle (1).

4. The sensor system for detecting a pedestrian collision as claimed in at least one of the preceding claims, **characterized in that** the signals of the fiber optic sensor (5) and of the infrared sensor (6) are evaluated by a control unit (7).

5. The sensor system for detecting a pedestrian collision as claimed in at least one of the preceding claims, **characterized in that** the control unit (7) is also fed signals from a temperature sensor (17) that are evaluated in the control unit (7) in addition to the signals of the fiber optic sensor (5) and of the infrared sensor (6).

6. The sensor system for detecting a pedestrian collision as claimed in at least one of the preceding claims, **characterized in that** the control unit (7) is also fed signals from a tachometer (22) that are evaluated in the control unit (7) in addition to the signals of the fiber optic sensor (5), of the infrared sensor (6) and of the temperature sensor (17).

## Revendications

1. Système détecteur destiné à la détection d'une collision avec un piéton dans la partie avant (4) d'un véhicule automobile (1), comportant au moins un détecteur (5) à fibre optique, qui s'étend, dans la partie avant (4) du véhicule automobile (1), pratiquement sur toute la largeur (19) du véhicule et qui se déforme sous l'effet d'une collision avec un objet (18, 20, 21) dans la partie avant (4), un signal étant généré par le détecteur (5) à fibre optique en raison de la collision avec l'objet (18, 20, 21), **caractérisé par le fait que**, en plus du détecteur (5) à fibre optique, au moins un détecteur à infrarouge (6) est placé dans la partie avant (4) du véhicule automobile (1) et génère un signal permettant de faire la distinction entre une collision avec un objet animé (18, 20) et un objet inanimé (21).

2. Système détecteur destiné à la détection d'une collision avec un piéton selon la revendication 1, **caractérisé par le fait que** le détecteur (5) à fibre optique est intégré dans le pare-choc avant (3) du véhicule automobile (1) .

3. Système détecteur destiné à la détection d'une collision avec un piéton selon la revendication 1 et / ou 2, **caractérisé par le fait que** le détecteur à infrarouge (6) est intégré dans le pare-choc avant (3) du véhicule automobile (1).

4. Système détecteur destiné à la détection d'une collision avec un piéton selon au moins l'une des revendications citées ci-dessus, **caractérisé par le fait que** les signaux du détecteur (5) à fibre optique et du détecteur à infrarouge (6) sont analysés par un appareil de commande (7).

5. Système détecteur destiné à la détection d'une collision avec un piéton selon au moins l'une des revendications citées ci-dessus, **caractérisé par le fait que** l'appareil de commande (7) reçoit aussi des signaux provenant d'un détecteur de température (17), qui sont analysés dans l'appareil de commande (7) en plus des signaux du détecteur (5) à fibre optique et du détecteur à infrarouge (6).

6. Système détecteur destiné à la détection d'une collision avec un piéton selon au moins l'une des revendications citées ci-dessus, **caractérisé par le fait que** l'appareil de commande (7) reçoit aussi des signaux provenant d'un appareil de mesure de la vitesse (22), qui sont analysés dans l'appareil de commande (7) en plus des signaux du détecteur (5) à fibre optique, du détecteur à infrarouge (6) et du détecteur de température (17).
